Europäisches Patentamt

European Patent Office

Office européen des brevets

(11) Veröffentlichungsnummer: **0 278 235 B1**

# (12) EUROPÄISCHE PATENTSCHRIFT

(45) Veröffentlichungstag der Patentschrift: **28.10.92**

(21) Anmeldenummer: **88100302.4**

(22) Anmeldetag: **12.01.88**

(51) Int. Cl.5: **C22B** **9/00**, C21C 7/00

## (54) Vorrichtung zum Aufbewahren einer oxidierbaren Schmelze.

(30) Priorität: **13.01.87 DE 3700701**

(43) Veröffentlichungstag der Anmeldung:
**17.08.88 Patentblatt 88/33**

(45) Bekanntmachung des Hinweises auf die
Patenterteilung:
**28.10.92 Patentblatt 92/44**

(84) Benannte Vertragsstaaten:
**DE ES FR GB IT SE**

(56) Entgegenhaltungen:
**EP-A- 0 125 173**
**CH-A- 297 089**
**DE-A- 1 558 001**
**GB-A- 311 812**
**LU-A- 51 471**

**HANDBOOK OF CHEMISTRY & PHYSICS, 56th**
**Ed.; pp. B-91, B-144&NUM;**

(73) Patentinhaber: **RÖPERWERK-**
**Giessereimaschinen GmbH**
**Brabanter Strasse 56**
**W-4060 Viersen 11(DE)**

(72) Erfinder: **Mitzner, Horst, Dipl.-Ing.**
**Werner-Heisenberg-Str. 31**
**W-4060 Viersen 11(DE)**
Erfinder: **Dellen, Franz, Dipl-Ing.**
**Habichtstr. 24**
**W-4050 Mönchengladbach 1(DE)**

(74) Vertreter: **Walter, Helmut, Dipl.-Ing.**
**Aubinger Strasse 81**
**W-8000 München 60(DE)**

## Beschreibung

Die Erfindung bezieht sich auf eine Vorrichtung zum Aufbewahren einer oxidierbaren Schmelze in einem Behälter unter Verwendung einer Schutzflüssigkeit, die infolge ihres geringeren spezifischen Gewichts gegenüber dem spezifischen Gewicht der Schmelze diese vollständig bedeckt und eine gleichmäßige Schutzschicht auf der Schmelze bildet, um den Zutritt von atmosphärischem Sauerstoff zu der Schmelze zu verhindern.

Es ist bereits ein Verfahren zum Schmelzen von Kupfer bekannt, bei dem die flüssige Kupferschmelze durch eine Natriumsilikatschmelze gegen Oxidation und die Aufnahme von Sauerstoff geschützt ist (GB-A-311 812). Die Natriumsilikatschmelze bildet für die Kupferschmelze eine flüssige Schutzschicht, die das geschmolzene Kupferbad während der Gießschritte vollständig bedeckt. Die Schutzwirkung der Natriumsilikatschmelze für die Kupferschmelze ist möglich, weil die flüssige Schutzschicht aus Natriumsilikat ein niedrigeres spezifisches Gewicht als die zu schützende Kupferschmelze hat (Handbook of Chemistry and Physics, 56. Auflage, 1975-1976, CRC Press, Seiten B91 und B144).

Von einer für ein solches Verfahren geeigneten Vorrichtung gemäß dem Gattungsbegriff des Anspruchs 1 ausgehend liegt der vorliegenden Erfindung die Aufgabe zugrunde, eine solche Vorrichtung so auszubilden, daß in einer insgesamt einfachen und zuverlässigen Weise eine Metallschmelze gegen den Zutritt von atmosphärischem Sauerstoff geschützt werden kann, aber auch eine genau dosierbare Abgabe von Metallschmelze aus dem Flüssigkeitsbehälter möglich ist.

Zur Lösung der Aufgabe wird gemäß der Erfindung vorgeschlagen, daß der Behälter ringsum flüssigkeitsdicht verschlossen ist, daß er für die Schmelze einen regelbaren Einlaß und einen Auslaß in der Form eines Steigrohrs aufweist, wobei das eine offene Ende des Steigrohrs im Bereich des Behälterbodens und das andere offene Ende des Steigrohrs oberhalb des oberen Behälterrands sich befindet, und daß der Behälter über eine Verbindungsleitung, die in den Kopfraum des Behälters mündet und eine Dosierpumpe einschließt, an einen Vorratsbehälter für die Schutzflüssigkeit angeschlossen ist.

Bei einer erfindungsgemäßen Vorrichtung ist es einerseits möglich, die Schmelze über einen praktisch unbegrenzten Zeitraum in dem Flüssigkeitsbehälter vorrätig zu halten, ohne daß sie durch Oxidation gefährdet wäre. Mittels der in einfacher Weise steuerbaren Pumpe ist es andererseits möglich, eine genau bestimmbare Menge von Schmelze aus dem Flüssigkeitsbehälter auszutreiben. Es liegt ein geschlossenes System vor, bei dem Verluste gering sind.

Die Unteransprüche geben Merkmale an, mit denen die Erfindung in zweckmäßiger Weise ausgebildet werden kann bzw. es gibt der Anspruch 6 einen besonders zweckmäßigen Anwendungsfall für die Erfindung an.

Die Erfindung ist nachfolgend anhand der Zeichnung näher beschrieben. In der Zeichnung zeigen in schematischer Darstellung

Fig.1 eine erfindungsgemäße Vorrichtung, die ein geschlossenes System zur Durchführung des erfindungsgemäßen Verfahrens darstellt und

Fig.2 eine erfindungsgemäße Vorrichtung, die ein offenes System zur Durchführung des erfindungsgemäßen Verfahrens darstellt.

In beiden Fällen weist die Vorrichtung einen aufrechtstehenden Behälter 3 auf, in den die Flüssigkeit 1 eingefüllt ist, die vor dem Zutritt atmosphärischen Sauerstoffes zu schützen ist. Es handelt sich bei der zu schützenden Flüssigkeit um eine Metallschmelze, die beim Zutritt von Sauerstoff exidieren würde, was verhindert werden soll. Die Einbringung der Metallschmelze 1 in den Flüssigkeitsbehälter 3 erfolgt in der Nähe des Behälterbodens durch eine Zuführungsleitung 4, in die ein Absperrorgan 5 integriert ist, um die Flüssigkeitszuführung steuern zu können, wobei es sich gegebenenfalls um eine einfache Auf- und Zusteuerung handeln kann oder aber um eine von einer Führungsgröße abhängige Regelung. Der Zutritt von Umgebungs- oder atmosphärischem Sauerstoff zu der zu schützenden Schmelze 1 wird durch eine nicht oxidierende Schutzflüssigkeit 2 verhindert, deren spezifisches Gewicht geringer ist als das der zu schützenden Schmelze, so daß die Schutzflüssigkeit 2 auf der zu schützenden Schmelze schwimmt. Da sich die Schutzflüssigkeit 2 wie die zu schützende Schmelze 1 vollständig an der Innenwand anlegt, kann an die zu schützende Schmelze keinerlei Umgebungssauerstoff gelangen.

In beiden Fällen erfolgt die Entnahme der zu schützenden Schmelze 1 durch die Schutzflüssigkeit 2 hindurch, weshalb vom Bereich des Behälterbodens aus ein Steigrohr 8 über den oberen Behälterrand hinausführt. Oberes und unteres Ende des Steigrohres 8 sind offen dargestellt, wobei selbstverständlich an beiden, insbesondere aber am oberen Ende übliche Armaturen vorgesehen sein können. Die Entnahme von Schmelze 1 kann grundsätzlich in der Weise erfolgen, daß die Schmelze Innerhalb des Behälters 3 unter Druck gesetzt wird, oder daß an das obere Ende des Steigrohres eine Absaugvorrichtung, beispielsweise eine Saugpumpe angeschlossen ist.

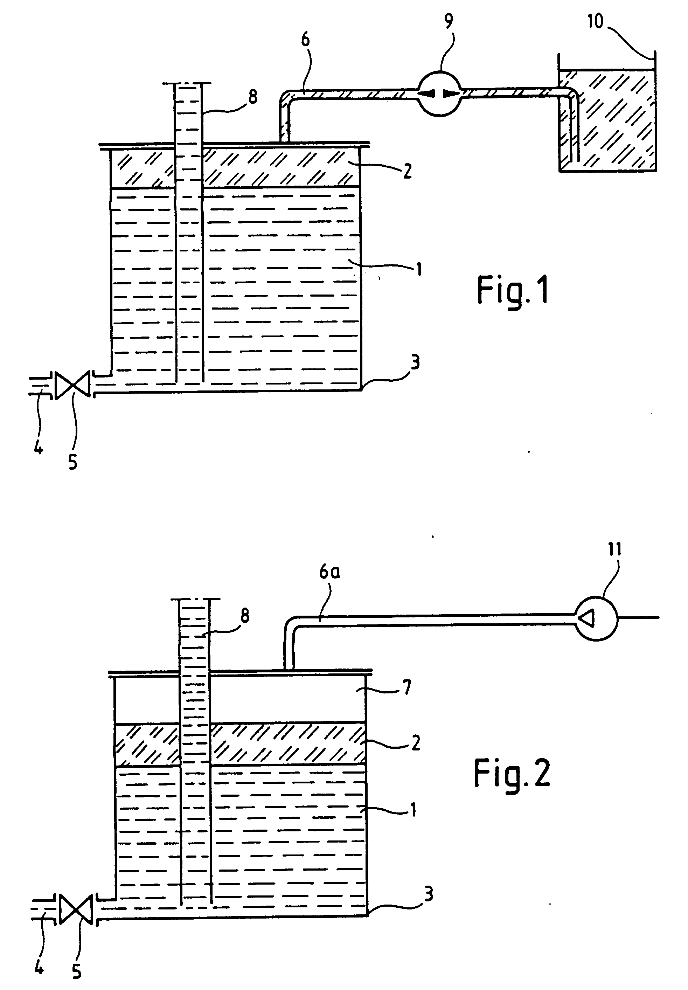

In beiden Fällen ist der Behälter 3 am oberen Ende durch einen Deckel 3a verschlossen, wobei das Verschließen im Fall der Fig.1 flüssigkeitsdicht, im Fall der Fig.2 flüssigkeits- und gasdicht erfolgt, wozu zwischen eigentlichem Behälter 3 und Deckel 3a entsprechende Dichtungen eingebaut sind.

Im Fall der Fig.1 wird die Schutzflüssigkeit 2 über eine zweite Zuführungsleitung 6 in den Kopfraum dem Behälters 3, d.h. den Raum unmittelbar unter dem Deckel 3a und oberhalb dem zu schützenden Fluids 1 eingeführt. Der Förderung der Schutzflüssigkeit aus einem Vorratsbehälter 10 in den Behälter 3 erfolgt mittels einer in die Leitung 6 integrierten Dosierpumpe 9 herkömmlicher Bauart. Entsprechend der in den Behälter 3 geförderten Schutzflüssigkeitsmenge kann ohne zusätzliche Hilfsmittel der Pegel der zu schützende Schmelze 1 bzw. die Entnahme der zu schützenden Schmelze geregelt werden. Es handelt sich um ein geschlossenes System, bei dem die zu schützende Schmelze 1 durch die Schutzflüssigkeit gegen Sauerstoffzutritt abgedeckt, höhengeregelt und unter Druck gehalten wird und, bei Verwendung einer Schutzflüssigkeit 2 mit geringer Wärmeleitung, temperiert gehalten wird.

Beider Lösung gemäß Fig.2 deckt die Schutzflüssigkeit 2 die zu schützende Schmelze ebenfalls und halt sie gegebenenfalls temperiert, die Höhen- bzw. Druckregelung erfolgt jedoch durch ein beliebiges, gasförmiges Medium 7. Während bei der Vorrichtung gemäß Fig.1 die Schutzflüssigkeit 2 zwischen Vorratsbehälter 10 und Kopfraum des Behälters 3 mittels der Dosierpumpe 9 hin- und hergepumpt wird, wird bei der Vorrichtung nach Fig.2 der Druck im Kopfraum mittels eines Druckreglers 11 in der Zuführungsleitung 6a für das gasförmige Medium 7 bestimmt, indem entsprechend dem im Druckregler 11 eingestellten Druck gasförmiges Medium einem Speicher entnommen und in den Kopfraum gefördert wird, oder der Druck durch Abblasen von pneumatischem Druckmittel verringert wird.

## Patentansprüche

1. Vorrichtung zum Aufbewahren einer oxidierbaren Schmelze in einem Behälter unter Verwendung einer Schutzflüssigkeit, die infolge ihres geringeren spezifischen Gewichts gegenüber dem spezifischen Gewicht der Schmelze diese vollständig bedeckt und eine gleichmäßige Schutzschicht auf der Schmelze bildet, um den Zutritt von atmosphärischem Sauerstoff zu der Schmelze zu verhindern, **dadurch gekennzeichnet,** daß der Behälter (3) ringsum flüssigkeitsdicht verschlossen ist, daß er für die Schmelze einen regelbaren Einlaß (4,5) und einen Auslaß in der Form eines Steigrohrs (8) aufweist, wobei das eine offene Ende des Steigrohrs im Bereich des Behälterbodens und das andere offene Ende des Steigrohrs oberhalb des oberen Behälterrands sich befindet, und daß der Behälter über eine Verbindungsleitung (6), die in den Kopfraum des Behälters mündet und eine Dosierpumpe (9) einschließt, an einen Vorratsbehälter (10) für die Schutzflüssigkeit angeschlossen ist.

2. Vorrichtung nach Anspruch 1, **dadurch gekennzeichnet,** daß die Schutzflüssigkeit drucklos unmittelbar auf der zu schützenden Flüssigkeit schwimmt.

3. Vorrichtung nach Anspruch 1 oder 2, **dadurch gekennzeichnet,** daß das Volumen der Schutzflüssigkeit über eine vorgegebene Betriebsdauer konstantgehalten wird.

4. Vorrichtung nach einem der Ansprüche 1 bis 3, **dadurch gekennzeichnet,** daß der Behälter (3) ringsum außer flüssigkeits- auch gasdicht verschlossen ist.

5. Vorrichtung nach einem der Ansprüche 1 bis 4, **gekennzeichnet** durch Mittel zum Temperieren der Schutzflüssigkeit.

6. Verwendung einer Vorrichtung nach zumindest einem der Ansprüche 1 bis 5 zur Aufbewahrung einer Metallschmelze unter einer nicht oxidierenden Schutzflüssigkeit.

## Claims

1. Apparatus for storing an oxidizable melt in a tank using a protective liquid which, because of its lower specific gravity than the specific gravity of the melt, fully covers the latter and forms a uniform protective layer on the melt to prevent the access of atmospheric oxygen to the melt, characterised in that the tank (3) is closed all round so as to be liquid-tight, in that it has an adjustable inlet (4, 5) acid an outlet in the form of a riser (8) for the melt, one open end of the riser being disposed in the region of the base of the tank and the other open end of the riser being situated above the top edge of the tank, and in that the tank is connected to a reservoir (10) for the protective liquid via a connecting conduit (6) which leads into the top of the tank and contains a metering pump (9).

2. Apparatus according to claim 1, characterised in that the protective liquid floats pressurelessly directly on the liquid for protection.

3. Apparatus according to claim 1 or 2, characterised in that the volume of the protective liquid is kept constant for a predetermined period of operation.

4. Apparatus according to any one of claims 1 to 3, characterised in that the tank (3) is sealed all round so as to be gas-tight in addition to liquid-tight.

5. Apparatus according to any one of claims 1 to 4, characterised by means for controlling the temperature of the protective liquid.

6. Use of an apparatus according to at least one of claims 1 to 5 for storing a metal melt under a nonoxydizing protective liquid.

**Revendications**

1. Installation pour conserver un bain en fusion oxydable dans un récipient en utilisant un liquide de protection qui, en raison de son poids spécifique plus réduit que le poids spécifique du bain en fusion, recouvre complètement celui-ci et forme une couche protectrice uniforme sur le bain en fusion, pour empêcher l'accès de l'oxygène atmosphérique au bain en fusion, caractérisé en ce que le récipient (3) est fermé de tous côtés de façon étanche aux liquides, en ce qu'il comporte pour le bain en fusion une arrivée réglable (4, 5) et une sortie sous forme d'un tube ascendant (8), l'une des extrémités ouvertes du tube ascendant se trouvant dans la zone du fond du récipient et l'autre extrémité ouverte du tube ascendant se trouvant au-dessus du bord supérieur du récipient, et en ce que le récipient est raccordé, par une conduite de liaison (6) qui débouche dans la chambre supérieure du récipient et contient une pompe de dosage (9), à un réservoir de stockage de liquide de protection.

2. Installation selon la revendication 1, caractérisée en ce que le liquide de protection flotte, sans pression, direction sur le liquide à protéger.

3. Installation selon la revendication 1 ou 2, caractérisée en ce que le volume du liquide de protection est maintenu constant sur une durée de service prédéterminée.

4. Installation selon l'une des revendications 1 à 3, caractérisée en ce que le récipient (3) est fermé de tous côtés de façon étanche non seulement aux liquides, mais aussi aux gaz.

5. Installation selon l'une des revendications 1 à 4, caractérisée par des moyens pour équilibrer la température du liquide de protection.

6. Utilisation d'une installation selon au moins l'une des revendications 1 à 5 pour conserver un bain métallique en fusion sous un liquide de protection non oxydant.

Fig.1

Fig.2